# EUROPÄISCHE PATENTSCHRIFT

(11) **EP 2 839 178 B1**
(45) Veröffentlichungstag und Bekanntmachung des Hinweises auf die Patenterteilung: **30.11.2016**
(21) Anmeldenummer: 13719275.3
(22) Anmeldetag: 19.04.2013
(51) Int. Cl.: F16D 55/226

(54) **SCHEIBENBREMSE FÜR FAHRZEUGE**
DISC BRAKE FOR VEHICLES
FREIN À DISQUE POUR VÉHICULES

(30) Priorität: 20.04.2012 DE 102012008003
(43) Veröffentlichungstag der Anmeldung: 25.02.2015
(73) Patentinhaber: KNORR-BREMSE Systeme für Nutzfahrzeuge GmbH, 80809 München (DE)
(72) Erfinder: BAUMGARTNER, Johann, 85368 Moosburg (DE); WERTH, Alexander, 80999 München (DE)
(86) Internationale Anmeldenummer: PCT/EP2013/001178
(87) Internationale Veröffentlichungsnummer: WO 2013/156164

(56) Entgegenhaltungen:
- EP-A1- 0 108 680
- DE-A1- 19 642 384
- US-A- 4 570 759
- US-A1- 2005 284 710

## Beschreibung

Die Erfindung betrifft eine Scheibenbremse für Fahrzeuge, insbesondere für Nutzfahrzeuge, mit beidseits einer Bremsscheibe angeordneten Bremsbacken mit Bremsbelägen, mit einer Zuspanneinrichtung zum Zuspannen einer der Bremsbacken und mit einem Bremssattel zum Übertragen der Zuspannkraft auf die Bremsbacke auf der anderen Seite -also reaktionsseitig- der Bremsscheibe.

Bremssättel von druckluftbetätigten Scheibenbremsen für schwere Nutzfahrzeuge sind wegen der Gestaltungsfreiheit und einfachen Herstellbarkeit üblicherweise als Gusskonstruktionen ausgeführt. Als Material wird dabei Gusseisen mit Kugelgraphit in einer höheren Festigkeitsklasse eingesetzt.

Eine gattungsgemäße Scheibenbremse wird in der DE 37 16 202 gezeigt. Die in dieser Schrift offenbarte Scheibenbremse wird pneumatisch betätigt und eignet sich daher vor allem für den Einsatz im Nutzfahrzeugbereich, wo sie sich auch in der Praxis gut bewährt hat. Als Kraftübertragungseinrichtung zum Übertragen der Zuspannkraft auf die Bremsbacke reaktionsseitig wird ein Bremssattel aus Gusseisen verwendet.

Diese Bremsenkonstruktionen sind, wie alle Achsenbauteile von Nutzfahrzeugen, einem starken Gewichtsreduzierungsdruck ausgesetzt da die Minderung des Gewichtes zum einen die mögliche Nutzlast erhöht zum anderen aber die Reduzierung der sog. nicht gefederten Masse der Achsenbauteile auch zur Ladungsschonung und zur Verbesserung der Fahreigenschaften und damit der Verkehrssicherheit beiträgt. Die Gewichtsoptimierung der Bremsen ist so weit fortgeschritten, dass mit den verfügbaren Gusswerkstoffen keine weitere Verbesserung ohne erhöhte Bruchgefahr der Bremssättel und/oder erhöhter Deformation derselben mit der Folge eines verschlechterten Betriebsverhaltens möglich erscheint (Hub, Ansprechzeit, Druckluftbedarf, unebener Belagverschleiß etc.)

Als Alternativmaterial erscheint Stahl geeignet da sehr hohe Festigkeit verbunden mit hoher Bruchdehnung und damit eine hohe Dauerfestigkeit erzielbar ist und der im Vergleich zu den bisher verwendeten Eisenguss Werkstoffen um ca. 35% höhere Elastizitätsmodul bei gleicher Beanspruchung eine niedrige Verformung des Sattels gewährleistet. Zur Realisierung des gewünschten niedrigen Gewichtes bei niedrigen Herstellkosten scheint die Verwendung von Stahlblech geeignet. Ein erster Ansatz zur Realisierung eines Stahlblechsattels als Verbundkonstruktion ist in DE 196 42 384 A1 beschrieben.

In der DE 196 42 384 A1 wird eine druckluftbetätigte Scheibenbremse vorgestellt, dessen Kraftübertragungseinrichtung zum Übertragen der Zuspannkraft auf die Bremsbacke reaktionsseitig -also der Bremssattel- nach Art eines ringsum geschlossenen Rahmens ausgebildet ist, welcher die Zuspannkräfte aufnimmt. Ein Modulkörper nimmt die Bremsmechanik auf und ermöglicht deren Vormontage. Der geschlossene Rahmen wird dabei durch einen Umformprozess aus Blech hergestellt.

Eine noch weitergehende Voll-Stahlblechkonstruktion des Bremssattels ist von der Kostenstruktur nicht wettbewerbsfähig, da der Verschnitt des eingesetzten Blechhalbzeugs sich deutlich negativ auf die Kostenstruktur eines Bremssattels aus Stahlblech auswirkt. Der hohe Materialkostenanteil ist resultiert wesentlich aus der komplexen Geometrie des Bremssattelrahmens, aus der sich zwangsläufig ein hoher Verschnittanteil bei einer Voll-Stahlblechkonstruktion ergibt.

Vornehmliches Entwicklungsziel bleibt jedoch eine Optimierung von Gewicht und Kosten der Scheibenbremse. Auf Grund des dominierenden Bauteilgewichts und damit auch dessen Dominanz hinsichtlich der Kostenstruktur einer Scheibenbremse bietet sich insbesondere der Bremssattel für eine Gewichts- und Kostenreduzierung an. Wobei sich ein reduziertes Gewicht beim Bremssattel signifikant leergewichtsreduzierend auswirkt, was speziell bei einer Nutzfahrzeugbremse ein wichtiger Aspekt ist, da durch ein niedriges Fahrzeugleergewicht mehr Nutzlast zugeladen werden kann.

Darüber hinaus werden durch das geringere Gewicht eines Bremssattels die ungefederten Massen am Fahrzeug reduziert, was sich positiv auf die Agilität des Fahrzeugs und auf den Fahrkomfort auswirkt, was z.B. insbesondere bei Personenkraftwagen aber auch bei Reisebussen ein ebenfalls wichtiger Aspekt ist.

Der Erfindung liegt daher die Aufgabe zu Grunde, eine Scheibenbremse zu schaffen, der die vorgenannten Nachteile vermeidet und der kostengünstig und damit wirtschaftlich hergestellt werden kann und gegenüber einer Scheibenbremse mit einem einteilig gegossenem Bremssattel einen signifikanten Gewichts- und Kostenvorteil aufweist.

Die Erfindung löst die Aufgabe dadurch, indem sie eine Scheibenbremse mit einem Bremssattel schafft, der reaktionsseitig einen Sattelrahmen aus einem umgeformten Stahl-Hohlprofil zum Übertragen der Zuspannkraft auf die Bremsbacke aufweist.

Dieser Bremssattelrahmen kann nun mit einem z.B. als Blechtiefziehteil hergestellten Sattelkopf durch Schweißen verbunden werden, ebenso ist jedoch auch die Kombination mit einem gegossenen Sattelkopf möglich.

Bei dieser Herstellmethode wird der Materialverlust auf ein Minimum reduziert. Bei der Fertigung des Hohlprofils ist lediglich ein Beschneiden der Kanten erforderlich. Der z.B. aus Blech hergestellte Sattelkopf stellt ein wannenförmiges Tiefziehteil dar welches ebenfalls ohne größeren Verschnitt herstellbar ist. Die notwendigen Schweißoperationen sind auf das Verbinden des Sattelrahmens mit dem Sattelkopf reduziert.

Der U-förmige Sattelrahmen wird aus einem Hohlprofil geformt, wobei die Formgebung stark durch die Bremsscheibe, den außen liegenden Bremsbelag sowie die um die Radbremse rotierende Felge und Radnabe bestimmt ist. Je geringer der Abstand zu den rotierenden Teilen des Rades gehalten werden kann desto mehr Bauraum steht für die Bremse zur Erzielung hoher Bremsleistungen zur Verfügung.

Aus diesem Grunde ist der zur Verfügung stehende Bauraum für den Sattelrahmen sehr beengt. Die seitlichen Zugstreben des Sattelrahmens, welche die Spannkraft der Bremse auf die Rückenseite überleiten, müssen in dem Ringspalt zwischen Bremsscheibe und Felge Platz finden und dabei ausreichenden Freigang zur Aufnahme von Fertigungs- Toleranzen, Wärmeausdehnung der Bremsscheibe und belastungsbedingten Deformationen bieten. Der Rücken des Sattelrahmens über den die von den Zugstreben übertragene Reaktionskraft in den äußeren Bremsbelag eingeleitet wird benötigt eine hohe Biegesteifigkeit da über dieses Merkmal die Sattelverformung wesentlich bestimmt wird. Andererseits soll der vom Sattelrücken beanspruchte axiale Bauraum möglichst gering sein, damit die Bremsscheibe in ihrer Einbauposition zur Erzielung eines günstigen Lenkrollradius maximal nach außen verschoben werden kann.

Aus diesen Randbedingungen ergibt sich, dass die Zugstreben in radialer Richtung sehr flach ausgebildet sind und die Bremsscheibe relativ breit überspannen um den notwendigen Querschnitt zur Zugkraftübertragung zu erzielen. Der Sattelrücken ist dagegen zur Erzielung einer max. möglichen Biegesteifigkeit in axialer Richtung so dick wie möglich gestaltet wodurch sich ein angenähert quadratischer Querschnitt ergibt.

Bei dem aus einem Hohlprofil gefertigten Sattelrahmen besteht nun die Schwierigkeit diese völlig unterschiedlichen Querschnittsformen und Dimensionierungs- Anforderungen aus einem Stück Rohr mit gleichbleibendem Durchmesser und Wanddicke zu gestalten. Eine Anforderung für die Formgebung ist z.B. dass die Länge der umlaufenden neutralen Faser in jedem Querschnitt zwangsläufig gleich der Länge der Umfangslinie auf dem mittleren Durchmesser des Rohres sein muss.

Weitere vorteilhafte Ausführungen der erfindungsgemäßen Scheibenbremse sind den Unteransprüchen zu entnehmen.

Ausführungsbeispiele einer erfindungsgemäßen Scheibenbremse sind in den Zeichnungen dargestellt und werden im Folgenden näher beschrieben.

Es zeigen:
- Figur 1:: eine Ausführungsvariante einer erfindungsgemäßen Scheibenbremse mit einem die Zuspannvorrichtung umgebenen Gussteil und einem Sattelrahmen aus einem umgeformten Stahl-Hohlprofil, der den reaktionsseitigen Teil des Bremssattel bildet;
- Figur 2:: eine räumliche Explosionsdarstellung der Ausführungsvariante einer erfindungsgemäßen Scheibenbremse nach Fig. 1;
- Figur 3:: eine räumliche Darstellung des Sattelrahmens aus einem umgeformten Stahl-Hohlprofil einer erfindungsgemäßen Scheibenbremse nach Fig. 1;
- Figur 4:: eine Schnittdarstellung nach der Schnittebene IV - IV nach Fig. 3 des Sattelrahmens aus einem umgeformten Stahl-Hohlprofil einer erfindungsgemäßen Scheibenbremse nach Fig. 1;
- Figur 5:: eine Schnittdarstellung nach der Schnittebene V - V nach Fig. 3 des Sattelrahmens aus einem umgeformten Stahl-Hohlprofil einer erfindungsgemäßen Scheibenbremse nach Fig. 1;
- Figur 6: eine Schnittdarstellung nach der Schnittebene VI - VI nach Fig. 3 des Sattelrahmens aus einem umgeformten Stahl-Hohlprofil einer erfindungsgemäßen Scheibenbremse nach Fig. 1.

In Fig. 1 ist ein Ausführungsbeispiel einer erfindungsgemäßen Scheibenbremse 1 dargestellt. Aus Vereinfachungsgründen ist nur der Bremssattel 2 der Scheibenbremse 1 dargestellt. Der Bremssattel 2 weist ein Gehäuse 3 auf, das die Zuspanneinrichtung (nicht dargestellt) der Scheibenbremse 1 aufnimmt. Das Gehäuse 3 wird in diesem Beispiel in einem Gießprozess hergestellt und demzufolge vorzugsweise aus Gusseisen mit Kugelgraphit höherer Festigkeit hergestellt. Der Bremssattel weist ferner einen bügelförmigen Sattelrahmen 4 auf, der am Gehäuse 3 befestigt ist.

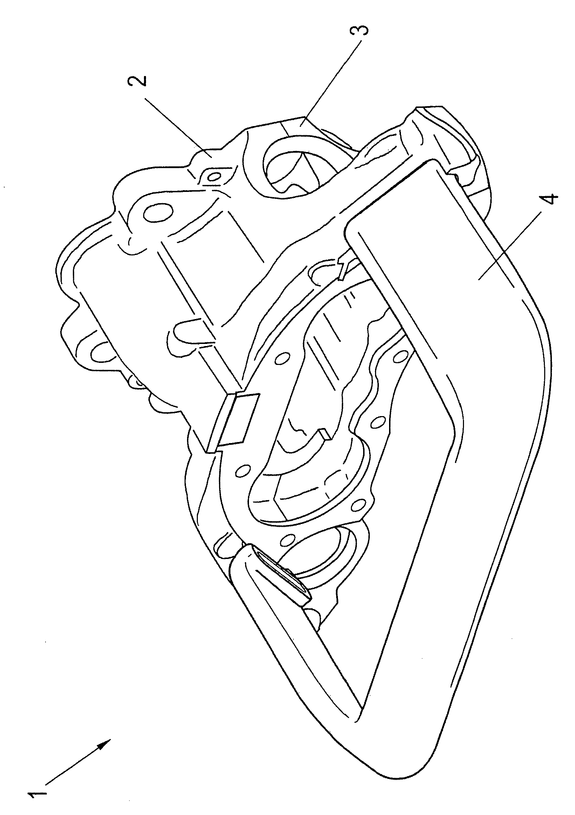

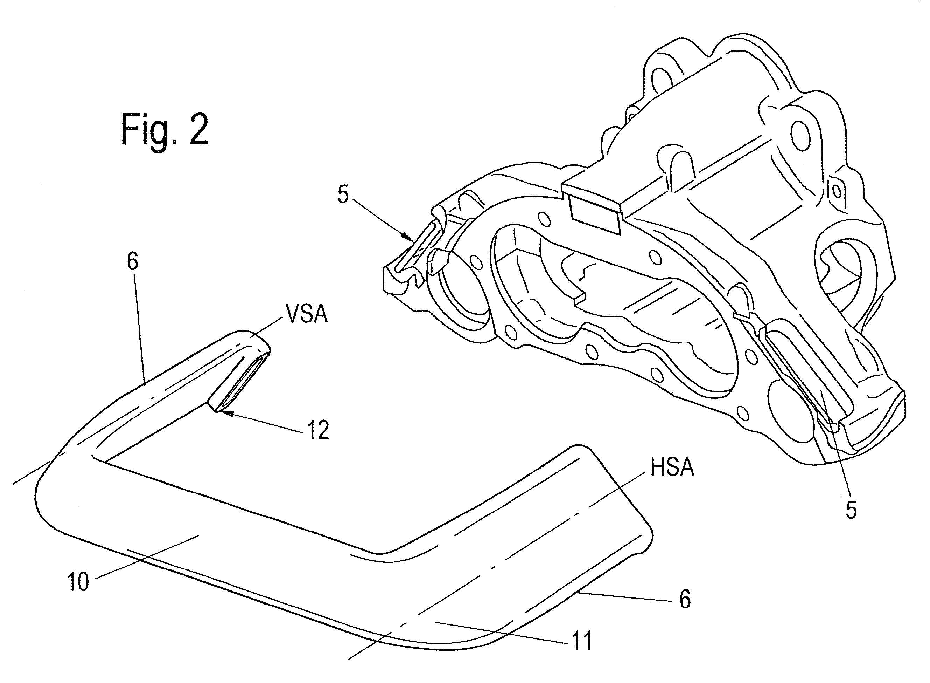

In Fig. 2 ist die Befestigung des Sattelrahmens 4 am Gehäuse 3 erkennbar. Das Gehäuse 3 weist dazu taschenartige Vertiefungen 5 auf, die eine langlochartige Geometrie aufweisen und beidseitig am Gehäuse 3 angeordnet sind. Die paarweise symmetrisch angeordnete taschenartige Vertiefung 5 ist zum reaktionsseitigen Ende des Gehäuses 3 hin offen. Der Sattelrahmen 4 weist an denen beiden Enden der Zugstreben 6 jeweils um 90° -bezogen auf die durch die vertikale Symmetrieachse VSA definierte Symmetrieebene gebogenen Ansätze 12 auf. Die Geometrie der Ansätze 12 ist konturkongruent zu den taschenartigen Vertiefungen 5 gestaltet, so dass die Ansätze 7 im montierten Zustand des Sattelrahmens 4 in die taschenartigen Vertiefungen 5 hineingreifen.

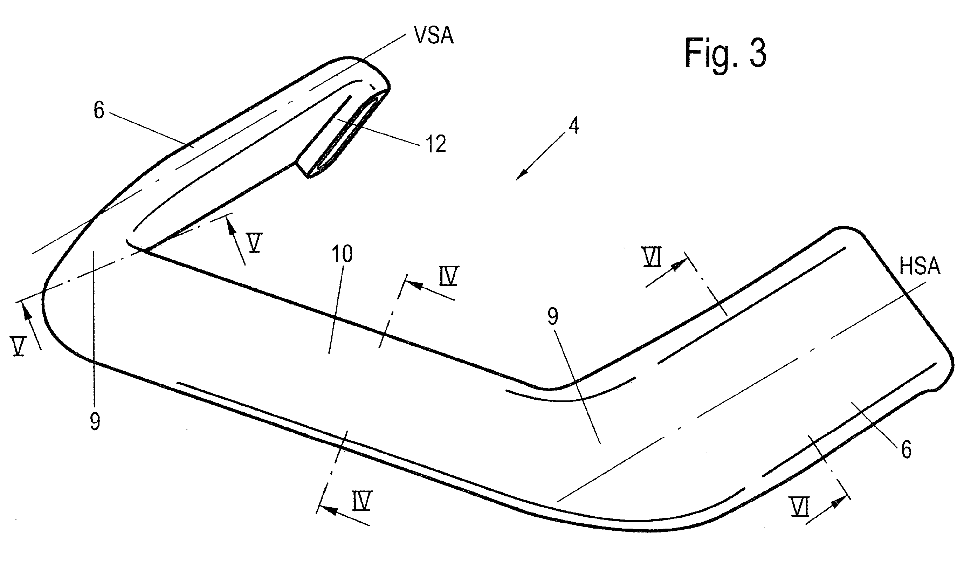

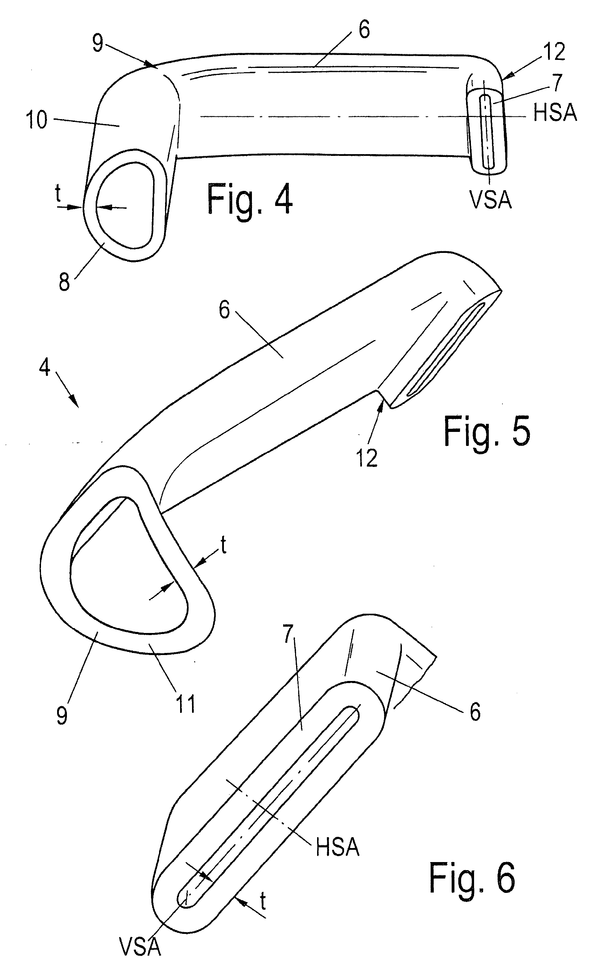

In Fig. 3 ist der bügelförmige Sattelrahmen 4 detailliert dargestellt. Die Zugstreben 6 des Sattelrahmens 4 weisen einen ovalen Querschnitt mit parallelen Seitenflächen 7 auf, der in Fig. 4 bzw. Fig. 6 erkennbar ist. Der Abschnitt des Sattelrahmens 4, der beide Zugstreben 6 verbindet, weist einen D-förmigen Querschnitt 8 auf, der ebenfalls in Fig. 4 erkennbar ist. Wobei der bauchige Teil der Querschnittsgeometrie auf der bremsscheibenabgewandten Seite des Querschnitts liegt und der parallel zur vertikalen Symmetrieachse der Zugstrebe 6 liegenden Teil des Querschnitts auf der bremsscheibenzugewandten Seite liegt. Die 90°-Biegungen 9 zwischen den Zugstreben 6 und dem Sattelrücken 10 des Sattelrahmens 4 weist einen Übergangsquerschnitt 11 auf, der sich durch den Übergang des ovalen Querschnitts mit parallelen Seitenflächen 7 an den beiden Zugstreben 6 des Sattelrahmens 4 und dem D-förmigen Querschnitt 8 am Sattelrücken 10 des Sattelrahmens 4 ergibt und in Fig. 5 erkennbar ist.

Erfindungswesentlich ist, dass die Wandstärke t des Sattelrahmens 4 an jedem beliebigen Punkt des Sattelrahmens 4 gleich groß ist und durch die zur Fertigung des Sattelrahmens 4 erforderlichen Umformvorgänge auch nicht wesentlich verändert wird, so dass sich auch in denen Zonen mit hohem Umformgrad entsprechend hohe Flächenmomente zweiter Ordnung für den Sattelrahmen 4 ergeben, die nicht durch verfahrenstypische Materialeinschnürungen im Zugbereich einer Umformzone geschmälert werden. Dadurch kann der Werkstoff des Sattelrahmens 4 unter Festigkeitsaspekten optimal und beanspruchungsgerecht ausgenutzt werden.

Um über den gesamten Querschnitt des Sattelrahmens 4 eine im Wesentlichen konstante Wandstärken t zu erreichen, ist ein mehrstufiger Umformprozess vorgesehen, wobei die erste Stufe des Umformprozesses eine Massevorverteilung in den Bereich des Sattelrückens 10 vorsieht, da andernfalls eine konstante Wandstärke t im Bereich des D-förmigen Querschnitts 8 in Bezug auf die Wandstärke im Bereich des ovalen Querschnitts mit parallelen Seitenflächen 7 an den beiden Zugstreben 6 des Sattelrahmens 4, der eine kleinere Querschnittsfläche aufweist als der D-förmige Querschnitt 8 im Bereich des Sattelrückens 10, durch einen Umformvorgang nicht erreichbar ist.

Darüber hinaus ist vorgesehen, dass die finale Stufe des mehrstufigen Umformprozess ein Innenhochdruckumformprozess ist, durch den insbesondere der D-förmige Querschnitt 8 im Bereich des Sattelrückens 10 und der Übergangsquerschnitt 11 im Bereich der 90°-Biegungen 9 zwischen Sattelrücken 10 und Zugstrebe 6 des Sattelrahmens 4 ausgeformt wird.

Die Sattelrahmengrundgeometrie sowie die Ansätze 12 werden mit einem geeigneten Umformverfahren, wie z.B. Schwenkbiegen in das Hohlprofil eingebracht, wobei das Hohlprofi vorzugsweise einen ovalen Querschnitt mit parallelen Seitenflächen 7 aufweist.

Der aus Stahlrohr gefertigte Sattelrahmen ist mit dem Guss- Sattelgehäuse formschlüssig verbunden und wird zusätzlich verschweißt (Fig. 1 und Fig. 2). Ebenso ist jedoch auch eine Schraubverbindung vorstellbar, wenn entsprechende die Muttergewinde beinhaltende Schraubeinsätze in die Rohr Enden eingeschweißt sind.

Im Falle eines Blech- Bremsengehäuses erfolgt die Verbindung ausschließlich durch verschweißen.

Die oben beschriebenen Geometrien sind lediglich beispielhaft zu verstehen. Zur Erhöhung der Biegesteifigkeit, z.B. des Sattelrückens 10 kann es auch sinnvoll sein, die Rohrwand an gegenüberliegenden Flächen, z.B. Belaganlagefläche und gegenüberliegende Außenwand, partiell so nach Innen zu verformen, dass diese gegenüberliegenden Teilflächen aufeinander zur Anlage kommen und verschweißt werden können.

### Bezugszeichenliste

- 1: Scheibenbremse
- 2: Bremssattel
- 3: Gehäuse
- 4: Sattelrahmen
- 5: Taschenartige Vertiefung
- 6: Zugstrebe
- 7: Ovaler Querschnitt mit parallelen Seitenflächen
- 8: D-förmiger Querschnitt
- 9: 90°-Biegung
- 10: Sattelrücken
- 11: Übergangsquerschnitt
- 12: Ansatz

- VSA: VertikaleSymmetrieachse
- HSA: Horizontale Symmetrieachse

- t: Wandstärke

## Patentansprüche

1. Scheibenbremse (1) für Fahrzeuge, insbesondere für Nutzfahrzeuge, mit beidseits einer Bremsscheibe angeordneten Bremsbacken mit Bremsbelägen, mit einer Zuspanneinrichtung zum Zuspannen einer der Bremsbacken und mit einem Bremssattel (2) zum Übertragen der Zuspannkraft auf die Bremsbacke auf der anderen Seite -also reaktionsseitig- der Bremsscheibe, **dadurch gekennzeichnet, dass** der Bremssattel (2) der Scheibenbremse (1) einen Sattelrahmen (4) aufweist, der aus einem umgeformten Hohlprofil hergestellt ist.

2. Scheibenbremse (1) nach Anspruch 1, **dadurch gekennzeichnet, dass** der Sattelrahmen (4) wenigstens eine Zugstrebe (6) aufweist.

3. Scheibenbremse (1) nach einem der vorgenannten Ansprüche, **dadurch gekennzeichnet, dass** der Sattelrahmen (4) wenigstens einen Sattelrücken (10) aufweist.

4. Scheibenbremse (1) nach einem der vorgenannten Ansprüche, **dadurch gekennzeichnet, dass** der Sattelrahmen (4) wenigstens einen Ansatz (12) zur Befestigung des Sattelrahmens (4) am Bremssattel (2) aufweist.

5. Scheibenbremse (1) nach einem der Ansprüche 2 bis 4, **dadurch gekennzeichnet, dass** die Zugstrebe (6) einen im Wesentlichen ovalen Querschnitt mit parallelen Seitenflächen (7) aufweist.

6. Scheibenbremse (1) nach einem der Ansprüche 3 bis 5, **dadurch gekennzeichnet, dass** der Sattelrücken (10) einen im Wesentlichen D-förmigen Querschnitt (8) aufweist.

7. Scheibenbremse (1) nach einem der Ansprüche 4 bis 6, **dadurch gekennzeichnet, dass** der Ansatz (12) einen im Wesentlichen ovalen Querschnitt mit parallelen Seitenflächen aufweist.

8. Scheibenbremse (1) nach einem der vorgenannten Ansprüche, **dadurch gekennzeichnet, dass** das Hohlprofil des Sattelrahmens (4) eine konstante Wandstärke (t) aufweist.

9. Scheibenbremse (1) nach einem der vorgenannten Ansprüche, **dadurch gekennzeichnet, dass** der Sattelrahmen (4) stoffschlüssig am Gehäuse (3) des Bremssattels (2) befestigt ist.

10. Scheibenbremse (1) nach einem der vorgenannten Ansprüche, **dadurch gekennzeichnet, dass** der Sattelrahmen (4) form- und / oder kraftschlüssig am Gehäuse (3) des Bremssattels (2) befestigt ist.

## Claims

1. Disc brake (1) for vehicles, in particular for commercial vehicles, with brake shoes which are arranged on both sides of a brake disc and have brake pads, with an application device for applying one of the brake shoes, and with a brake calliper (2) for transferring the application force to the brake shoe on the other side, i.e. the reaction side, of the brake disc, **characterised in that** the brake calliper (2) of the disc brake (1) has a calliper frame (4) which is made from a formed hollow profile.

2. Disc brake (1) according to claim 1, **characterised in that** the calliper frame (4) has at least one tension strut (6).

3. Disc brake (1) according to any of the preceding claims, **characterised in that** the calliper frame (4) has at least one calliper rear (6).

4. Disc brake (1) according to any of the preceding claims, **characterised in that** the calliper frame (4) has at least one shoulder (12) for securing the calliper frame (4) to the brake calliper (2).

5. Disc brake (1) according to any of claims 2 to 4, **characterised in that** the tension strut (6) has a substantially oval cross-section with parallel side faces (7).

6. Disc brake (1) according to any of claims 3 to 5, **characterised in that** the calliper rear (10) has a substantially D-shaped cross-section (8).

7. Disc brake (1) according to any of claims 4 to 6, **characterised in that** the shoulder (12) has a substantially oval cross-section with parallel side faces.

8. Disc brake (1) according to any of the preceding claims, **characterised in that** the hollow profile of the calliper frame (4) has a constant wall thickness (t).

9. Disc brake (1) according to any of the preceding claims, **characterised in that** the hollow profile of the calliper frame (4) is secured to the housing (3) of the brake calliper (2) by adhesive force.

10. Disc brake (1) according to any of the preceding claims, **characterised in that** the hollow profile of the calliper frame (4) is secured to the housing (3) of the brake calliper (2) positively and/or non-positively.

## Revendications

1. Frein à disque (1) pour véhicules, en particulier pour véhicules utilitaires, comprenant des mâchoires de frein disposées des deux côtés d'un disque de frein, et comprenant un moyen de serrage à serrer une desdites mâchoires, et comprenant un étrier de frein (2) à transférer la force de serrage à ladite mâchoire de frein de l'autre côté - c.à.d. au côté de réaction - dudit disque de frein, **caractérisé en ce que** ledit étrier de frein (2) du frein à disque (1) comprend un châssis d'étrier (4) produit d'un profil creux reformé.

2. Frein à disque selon la revendication 1, **caractérisé en ce que** ledit châssis d'étrier (4) comprend au moins un tirant (6).

3. Frein à disque selon une quelconque des revendications précédentes, **caractérisé en ce que** ledit châssis d'étrier (4) comprend au moins un dos d'étrier (10).

4. Frein à disque selon une quelconque des revendications précédentes, **caractérisé en ce que** ledit châssis d'étrier (4) comprend au moins un ergot (12) pour la fixation dudit châssis d'étrier (4) audit étrier de frein.

5. Frein à disque selon une quelconque des revendications 2 à 4, **caractérisé en ce que** ledit tirant (6) présente une section essentiellement ovale, aux faces latérales parallèles (7).

6. Frein à disque selon une quelconque des revendications 3 à 5, **caractérisé en ce que** ledit dos d'étrier (10) présente une section transversale (8) essentiellement en D.

7. Frein à disque selon une quelconque des revendications 4 à 6, **caractérisé en ce que** ledit ergot (12) présente une section transversale essentiellement ovale, aux faces latérales parallèles.

8. Frein à disque selon une quelconque des revendications précédentes, **caractérisé en ce que** ledit profil creux dudit cadre d'étrier (4) présente une épaisseur constante (t) de paroi.

9. Frein à disque selon une quelconque des revendications précédentes, **caractérisé en ce que** ledit châssis d'étrier (4) est fixé par liaison de matière au carter (3) dudit étrier de frein (2).

10. Frein à disque selon une quelconque des revendications précédentes, **caractérisé en ce que** ledit châssis d'étrier (4) est fixé en complémentarité de forme et/ou de force au carter (3) dudit étrier de frein (2).
